(19) Europäisches Patentamt
European Patent Office
Office européen des brevets

(11) Publication number : **0 604 222 A1**

# (12) EUROPEAN PATENT APPLICATION

(21) Application number : **93310436.6**

(22) Date of filing : **22.12.93**

(51) Int. Cl.[5] : **C09B 69/00,** C08K 5/46, C08K 5/00, C09D 11/02, C08G 65/28

(30) Priority : **22.12.92 US 995226**

(43) Date of publication of application : **29.06.94 Bulletin 94/26**

(84) Designated Contracting States : **DE FR GB IT**

(71) Applicant : **MILLIKEN RESEARCH CORPORATION**
**920 Milliken Road**
**Spartanburg, South Carolina 29303 (US)**

(72) Inventor : **Moody, David Jesse**
**409 Garden Grove Court**
**Spartanburg, SC 29302 (US)**
Inventor : **Nunez, Roberto**
**211 Wexford Lane**
**Spartanburg, SC 29301 (US)**
Inventor : **King, Clifford Reilly**
**13A Pinecroft Drive**
**Taylors, SC 29687 (US)**

(74) Representative : **Pattullo, Norman**
**Murgitroyd and Company**
**373 Scotland Street**
**Glasgow G5 8QA (GB)**

## (54) Shade stable poly(oxyalkylene)substituted azo colorant.

(57) A colorant is provided having the formula :

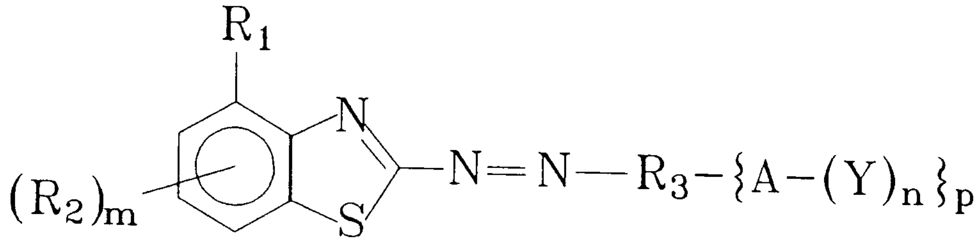

where $R_1$ is $C_1$-$C_4$ alkyl, Cl or Br ; $R_2$ is at each occurrence independently selected from $C_1$-$C_4$ alkyl, $-OR_4$, $-CO_2R_4$, Cl, Br, $CF_3$, $-NO_2$ or $-SO_3^-M^+$ where $R_4$ is $C_1$-$C_8$ alkyl or phenyl, M is a counter ion selected from alkali and alkaline earth metals, ammonium and amine derived cations ; and where m is 0, 1, 2 or 3 ; $R_3$ is a phenyl or naphthyl radical which may be substituted up to four groups independently selected from $C_1$-$C_4$ alkyl, $-OR_4$, $-CO_2R_4$, Cl, Br, $CF_3$, $-SO_2N(R_4)_2$, $-SO_2NHR_4$, $NHR_4$, $-N(R_4)_2$, and $-SO_3^-$ $M^+$ where $R_4$ and M are identified above ; A is a linking group selected from N and O ; Y is a poly(oxyalkylene) substituent having from 4 to 250 $C_2$-$C_4$ alkylene oxide residues ; where n is 1 when A is O, and 2 when A is N ; and p is 1 or 2.

EP 0 604 222 A1

## BACKGROUND OF THE INVENTION

This invention relates to a poly(oxyalkylene) substituted benzothiazole azo colorant having improved shade stability in the presence of acid. The colorant is especially useful for coloring thermoplastic resins, such as polyolefins and solution resinates.

Poly(oxyalkylene) substituted colorants are well known. Hauser et al., U.S. Patent 4,102,644, disclose poly(oxyethylene) substituted fugitive tints useful for temporarily coloring nylon fiber. Poly(oxyalkylene) fugitive tints which are particularly alkaline stable are disclosed by Foster et al., U.S. Patent 3,927,044.

In addition to providing temporary coloration to textile fibers, poly(oxyalkylene) substituted colorants can be incorporated into thermoplastic resins to provide permanent coloration. The colorants have the advantage of being transparent and essentially non-extractable from the resin. Colored thermoplastic resin compositions are disclosed in Baumgartner et al., U.S. Patent 4,732,570.

Poly(oxyalkylene) substituted colorants have been demonstrated to have utility in coloring a wide variety of thermoplastic resins. Nevertheless, these resins may contain residual compounds from the polymerization process, such as acid catalysts, which have a detrimental effect on colorants incorporated therein. Additionally, the resin may contain additive packages which contain antioxidants, lubricants and plasticizers which can interact with the colorants used.

Residual acid present in the thermoplastic resin has been identified as causing shade shifts and decolorization of some poly(oxyalkylene) substituted colorants, especially during molding operations. Stearates, such as calcium stearate, may be added to resins as an acid scavenger, providing some degree of protection. However, significant levels of acid scavengers must be added to the resin to achieve stability for pH sensitive colorants, thus adding to the cost of the resin. Further, residual acid levels and the stabilization packages vary from one source of resin to the next, which also limits the use of pH sensitive colorants.

For example, Keller et al., U.S. Patent 4,400,320, disclose a 2-amino-6-methoxybenzothiazole based poly(oxyalkylene) substituted colorant. This benzothiazole colorant has been successfully incorporated into polyolefin resins and generally offers good heat and light stability. Nevertheless, shade shifts and decolorization have been observed when the colorant is incorporated into unstabilized resins, thus, limiting the colorant's use.

In addition to finding utility in coloring thermoplastic resins, poly(oxyalkylene) substituted colorants have been employed in ink formulations. For example, Baumgartner et al., U.S. Patent 4,812,141 disclose solvent based gravure inks claiming poly(oxyalkylene) substituted colorants useful for paper printing. A significant portion of the paper used in the printing industry is acidic. Thus, the pH sensitivity of the colorant is critical in printing applications as well.

## SUMMARY OF THE INVENTION

Therefore, one of the objects of the invention is to provide a poly(oxyalkylene) substituted colorant for incorporation into a thermoplastic resin.

Another object of the invention is to provide a colorant which may be used in resins having an appreciable acid content, without the colorant shifting shade or losing intensity.

Still another object of the invention is to provide a colorant which may be used in resin having a high residual acid content, without the necessity of adding acid scavengers.

Yet another object of the invention is to provide colorant useful in ink formulations which may be used in conjunction with acidic printing stock or varnishes having an acidic nature.

Accordingly, a novel azo colorant is provided having a benzothiazole radical coupled at the number two position by an azo group to a poly(oxyalkylene) substituted aromatic radical, wherein the benzothiazole radical is substituted at the four position by a $C_1$-$C_4$ alkyl, Cl or Br group. Without being bound to a particular theory, it is believed that substitution at the number four position of the benzothiazole radical provides stearic hindrance to protonation of the amino nitrogen. As used herein, the term "aromatic radical" is intended to refer to phenyl and naphthyl radicals. In addition to having one or more poly(oxyalkylene) substituents, the aromatic radical may be substituted with one or more alkyl, alkoxy, ester, trifluoromethane, amino, halo, sulfonic acid salt or sulfonamido groups, without deviating from the pH stability of the colorant.

## DESCRIPTION OF THE PREFERRED EMBODIMENT OF THE INVENTION

Without limiting the scope of the invention, the preferred colorants have the following general structure:

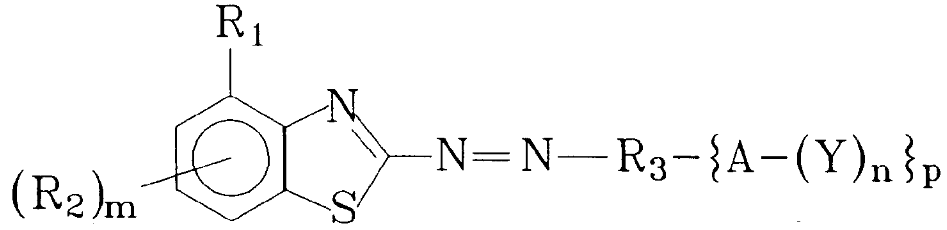

$R_1$ is $C_1$-$C_4$ alkyl, Cl or Br; $R_2$ is at each occurrence independently selected from $C_1$-$C_4$ alkyl, $-OR_4$, $-CO_2R_4$, Cl, Br, $CF_3$, $-NO_2$ or $-SO_3^-M^+$ where $R_4$ is $C_1$-$C_8$ alkyl or phenyl, M is a counter ion selected from alkali and alkaline earth metals, ammonium, and amine derived cations; and where m is 0, 1, 2 or 3; $R_3$ is a phenyl or naphthyl radical which may be substituted up to four groups independently selected from $C_1$-$C_4$ alkyl, $-OR_4$, $-CO_2R_4$, Cl, Br, $CF_3$, $-SO_2N(R_4)_2$, $-SO_2NHR_4$, $NHR_4$, $-N(R_4)_2$, and $-SO_3^-$ $M^+$ where $R_4$ and M are identified above; A is a linking group selected from N and O; Y is a poly(oxyalkylene) substituent having from 4 to 250 $C_2$-$C_4$ alkylene oxide residues; where n is 1 when A is O, and 2 when A is N; and p is 1 or 2.

Preferably, the colorant has one or more of the following features.

- $R_1$ is methyl or ethyl;
- m is 0 or 1;
- $R_3$ is phenyl and is optionally substituted with up to two groups selected from $C_1$-$C_4$ alkyl, $-OR_4$, $-CO_2R_4$, Cl, Br, $CF_3$, $-SO_2N(R_4)_2$, $-SO_2NHR_4$, $NHR_4$, and $-N(R_4)_2$;
- Y is a poly(oxyalkylene) substituent having from 4 to 40 $C_2$-$C_4$ alkylene oxide residues;
- the $C_2$-$C_4$ alkylene oxide residues are selected from ethylene oxide and propylene oxide residues;
- A is nitrogen; and
- p is 1.

In a preferred embodiment, the invention is directed to colorants having the following formula.

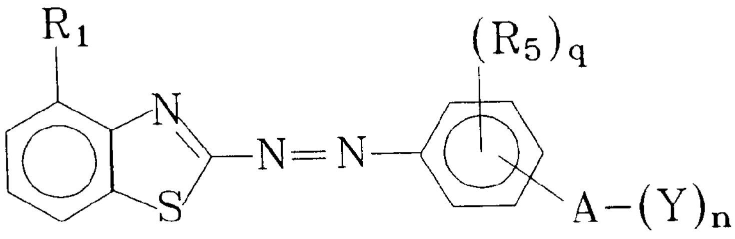

where $R_1$ is independently selected at each occurrence from $C_1$-$C_4$ alkyl, preferably methyl or ethyl; $R_5$ is independently selected at each occurrence from $C_1$-$C_4$ alkyl, $-OR_4$, $-CO_2R_4$, Cl, Br, $CF_3$, and where $R_4$ is $C_1$-$C_8$ alkyl or phenyl; q is 0, 1, or 2, preferably 0 or 1; A is a linking group selected from N and O; and Y is a poly(oxyalkylene) substituent having from 4 to 250 $C_2$-$C_4$ alkylene oxide residues, preferably 4 to40 of such residues; and n is 1 when A is O, and n is 2 when A is N.

Colorants of the present invention may be prepared following the procedures detailed in Keller et al., U.S. Patent 4,400,320, incorporated by reference, except, of course, a 2-amino-4-alkylbenzothiazole intermediate is used as the starting material.

In the first step of the process, a suitable intermediate, e.g., an aromatic compound and at least one suitable linking moiety is converted into a corresponding alkylene oxide-containing compound. The conversion may be accomplished quite readily by simply bubbling an appropriate alkylene oxide through a reactor containing the aromatic compound in the liquid phase. If the aromatic compound is a solid at ambient conditions of temperature and pressure, it may be heated to provide the compound in the liquid phase for reaction with the alkylene oxide. Upon reaction of the appropriate number of alkylene oxide equivalents, formation of the corresponding hydroxylated compound will typically have been completed. Examples of such hydroxylated compounds are, N,N-dihydroxyethylaminophenol; N,N-dihydroxyethylaniline; and N,N-dihydroxyethyl-2,5-dimethoxyaniline.

The corresponding hydroxylated compounds may then be reacted with further quantities of alkylene oxide by addition of an appropriate basic catalyst to the reactor, e.g., potassium hydroxide, and then adding alkylene

oxide to obtain the desired alkyleneoxy constituent for the hydroxyalkylated compound and, ultimately, the colorant.

Typical of such groups which may constitute the poly(oxyalkylene) substituent of the aromatic intermediate are the polymeric reaction products of alkylene oxides, such a the polyalkylene oxides and copolymers thereof, including those made from alkylene oxide monomers containing from 2 to about 4 carbon atoms. Examples include polyethylene oxides, polypropylene oxides, polybutylene oxides, copolymers of polyethylene oxides, propylene oxides and polybutylene oxides, and other copolymers including block and random copolymers in which a majority of the polymeric constituent is alkylene oxide residues.

Branching may be increased in the poly(oxyalkylene) substituent by reacting one or more moles of glycidol, or even chloropropane diol, into the polymer chain. More uniform branching may be achieved by next reacting a secondary hydroxyl forming alkylene oxide, such as propylene oxide, with all of the primary hydroxyl sites of the glycidol residue, prior to the addition of ethylene oxide.

Poly(oxyalkylene) substituents having from 4 to 250 alkylene oxide residues each have been found to render the colorant essentially nonextractable from thermoplastic resins. Diminishing returns are observed at the higher molecular weights, and poly(oxyalkylene) substituents having from 4 to 40 alkylene oxide residues are preferred. Based upon the colorant molecule, optimum performance with regard to extractability and color strength is observed when the total number of alkylene oxide residuesis from 8 to 80.

It is to be understood that because the colorants may not ordinarily be chemically bound to the thermoplastic polymer, the precise chemical identity of the terminal group on the poly(oxyalkylene) group may not be critical, insofar as the proper functioning of the colorant in the composition is concerned. By way of example and not limitation, examples of suitable terminal groups include -OH, -SH, $-NH_2$, -OR, -OOCR, -NHR, -NRR', $-OSO_3^-M^+$, $-OPO_3^-M^+$, where R and R' are selected from $C_1$-$C_{20}$ alkyl and phenyl, and M is a counter ion.

In a separate step, a diazo compound may be formed by reacting a diazo precursor compound, e.g., 2-amino-4-methylbenzothiazole with suitable diazo forming reactants, such as nitrosylsulfuric acid in the presence of for instance, a strong mineral acid, e.g. phosphoric acid, sulfuric acid, etc. The reaction is carried out under appropriate conditions of temperature, e.g., from about -20° C to about 10° C, preferably about -10° C to about 5° C, and pressure, typically atmospheric pressure, with suitable agitation.

External cooling of the reaction may be required to maintain the desired temperature of the reaction mixture during the exothermic reaction. Also, the temperature of the reaction mixture may further be controlled by charging the 2-amino-4-methyl benzothiazole to the reaction vessel containing the other reactants at a rate sufficient to maintain the desired temperature range.

The diazo compound is then coupled to the poly(oxyalkylene) substituted aromatic compound to form the subject colorant. Such coupling may be conveniently accomplished by first diluting the poly(oxyalkylene) substituted aromatic compound, especially if it is a solid, with water. Then the reaction mixture may be cooled to from about -10° C to about 20° C, preferably 0° C to 10° C, whereupon the diazo compound may be added with agitation to the reaction mixture in a stoichiometric amount relative to the poly(oxyalkylene) substituted aromatic compound present in the reaction mixture. Then, if desired, the pH of the crude reaction product may be adjusted to stabilize the product to a neutral or slightly basic pH. If desired, the colorant may be purified by removing residual salt, by any suitable process known to those skilled in the art.

The colorants of the present invention may be incorporated into a wide range of thermoplastic resins including polyolefins, e.g., polyethylene, linear low density polyethylene, polypropylene, polybutylene and random and block copolymers made from ethylene, propylene and/or butylene. Other thermoplastic polymers which may be employed according to the present invention include polyvinyl chloride, polyvinylidene chloride, cellulosic resins such as cellulose acetate, cellulose acetate butyrate and cellulose acetate propionate, acrylic resins, such as polymethyl methacrylate, styrene acrylonitrile, polystyrene, polycarbonate and acrylonitrile-butadiene-styrene (ABS), polyamides, such as nylon 6 and nylon 6,6, and polyesters such as polyethylene teraphthalate, glycol modified polyethylene teraphthalate and polybutylene teraphthalate.

The colorants of the present invention are also compatible with resins used in ink formulations. For example, the colorant may be used in conjunction with the following resins: polyamides, polyesters, rosin maleic anhydride adducts and their metallates, lacquers, phenolic resins or acrylates.

Other conventional additives may also be present in the resin composition in addition to the poly(oxyalkylene) substituted colorant. For instance, such additives may include plasticizers, antioxidants, stabilizers, lubricants, flame retardants, nucleating agents and other additives which will be readily identified by those skilled in the art.

The colorants may be employed in the thermoplastic resins in a minor amount sufficient to provide the desired degree of coloration in the resin. The actual amount used will, in addition to the desired depth of shade, depend upon the overall molecular weight of the colorant, e.g. chromophore plus poly(oxyalkylene) chain link. Typically, the amount of colorant employed may be from about 0.0001% to about 5%, preferably from about

0.001% to about 3%, by weight based upon the overall weight of the resin composition. In ink applications, as much as 40 wt% of the colorant and thermoplastic resin composition may comprise the colorant.

The colorants may be incorporated into the thermoplastic resin using conventional techniques such as those employed to incorporate other additives into resins, and disclosed in Baumgartner et al., U.S. Patents 4,732,570 and 4,812,141, both incorporated by reference. For example, the colorant may be incorporated into the resin while the resin is in a plasticized or molten state to distribute the colorant throughout. The colorant may be added directly to the molten resin. Alternatively, it may be premixed with the resin by tumbling with pre-extruded pellets or mixing the colorant into resin powder prior to extrusion. The polymer may then be molded or extruded in the usual manner, i.e., as for resins which are not colored. The colorant may be incorporated into a resin as a concentrate and extruded with uncolored resin as is well known in the art.

The colorant may be incorporated into the resin by first dissolving the resin in a suitable solvent, incorporating the colorant into the solution of the resin and solvent, and then evaporating the solvent, whereby the colorant will become distributed throughout the mass of the thermoplastic resin. Such a technique has been found to be particularly advantageous where coloration is to be provided in films or laminate. In addition, thermoplastic resins have found wide utility in ink formulations, and the colorant of the present invention may be conveniently incorporated into the final thermoplastic resin ink by incorporating it into the ink composition, which is essentially the dissolved thermoplastic resin in a suitable solvent-vehicle together with an appropriate quantity of colorant as described herein.

The present colorants are polymeric in nature and may be in liquid phase at ambient temperatures. Thus, if in the liquid phase, they may be added to the thermoplastic resin melt in solvent free form rather than in the form of solutions of dispersions in a suitable solvent or dispersing medium. Alternatively, however, the colorants may be premixed with minor amounts of a solvent or dispersing agent which is compatible with the resin, thus providing certain processing advantages.

The following examples illustrate the invention, but are not to be construed as limiting the invention which is defined in the claims appended hereto. The parts and percentages, unless otherwise indicated, are all by weight.

**Example 1**

The following non-polymeric benzothiazole azo colorants, designated Dyes A, B and C, having the following structures, were each tested in stabilized and unstabilized polypropylene/polyethylene random copolymer resin to determine their stability.

Colorant A (CAS No. 63086-69-1):

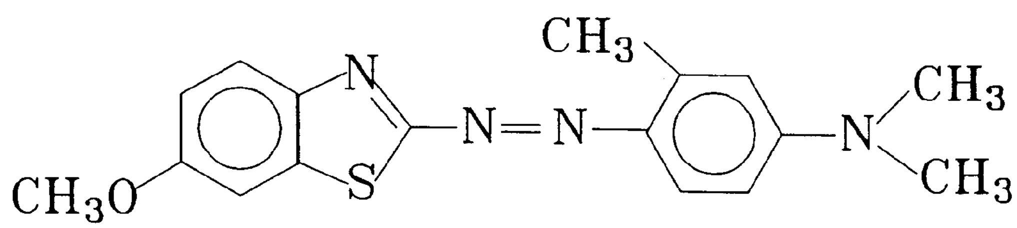

Colorant B (CAS No. Not Available):

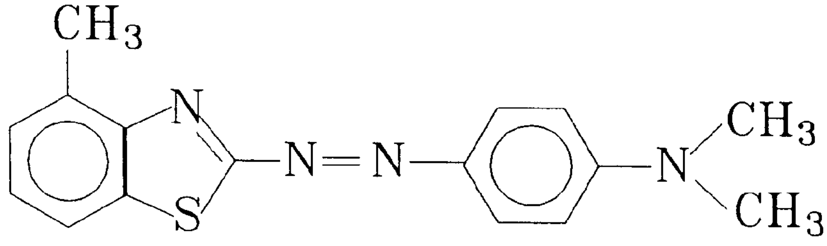

Colorant C (CAS No. 3804-32-8):

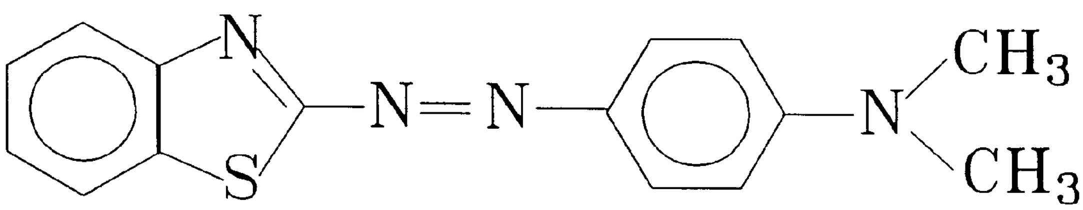

The stabilized resin was Himont's 747, which in addition to an antioxidant and lubricant, contained a metallic stearate acid scavenger. The unstabilized resin was Exxon 9142G which has a relative high residual acid content and does not contain an acid scavenger/stabilizer package. Both resins are random copolymers, having approximately 97% polypropylene and 3% polyethylene content. The dyes were blended and extruded with the resin and molded into plaques according to the following procedure.

First, in order to correct for differences in color strength among the colorants, the weight of each colorant used was adjusted to provide uniform color value. Accordingly, 0.034g., 0.037g., and 0.029g. of Dyes A, B and C, respectively, were each added to 1,000 grams of resin pellets. The mixture was then tumbled for five minutes to ensure uniform distribution of the colorant over the surface of the pellets. Where necessary, a minimum amount of methanol was first mixed with colorant to produce a uniform solution, prior to adding the colorant to the resin pellets.

The colored pellets were then injection molded at about 410° F into 3 inch x 2 inch plaques with a bi-level thickness of 50 mils. and 85 mils.

The plaques were analyzed on an ACS Spectrophotometer. The stabilized resin was used as the standard and compared to the measurement for the colorant in the unstabilized resin. The difference was calculated and designated $\Delta$ E in Table 1 below.

**TABLE 1**

| Dye | $\lambda$ max (nm) (Stabilized Resin) | $\Delta$ E |
|---|---|---|
| Dye A (6-methoxy) | 486 | 13.2 |
| Dye B (4-methyl) | 466 | 14.4 |
| Dye C (unsubstituted) | 468 | 11.0 |

An analysis of the stability of various benzothiazole azo dyes and resins having a residual acid level indicates that the unsubstituted dye, Dye C, is the most stable, the 6-methoxy substituted dye, Dye A, ranks next for stability, and the 4-methyl substituted dye, Dye B, is the least stable.

**Example 2**

The poly(oxyalkylene) substituted analogs to the dyes were prepared and identified as polymeric colorants D, E and F, and their structures are set out below. Fractions of alkylene oxide residues are based upon average values.

Colorant D:

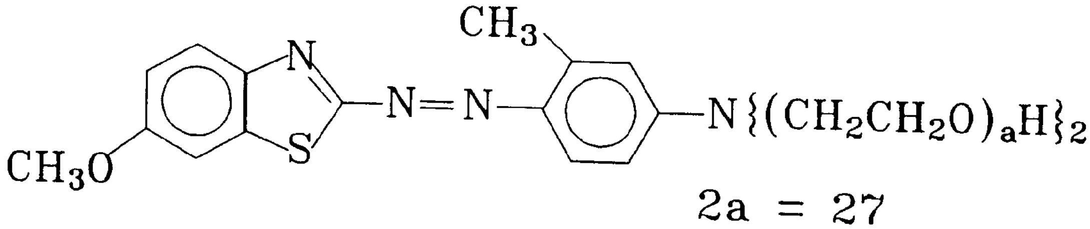

$2a = 27$

Colorant E:

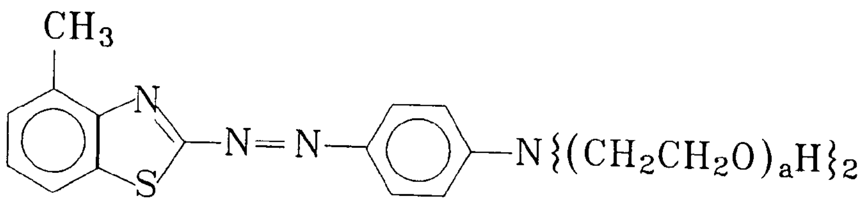

$2a = 27$

Colorant F:

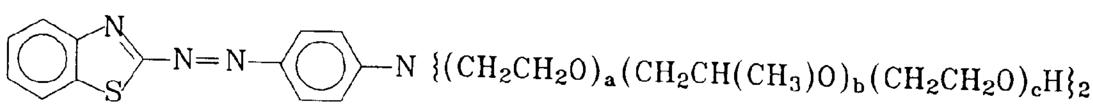

$2a = 2,\ 2b = 10,\ 2c = 10$

The polymeric colorants were incorporated into the stabilized and unstabilized resin under substantially the same conditions as Example 1, i.e. 0.18g., 0.17g. and 0.12g. of Colorants D, E and F, respectively, were each incorporated into 1000 grams of resin. Similarly, the plaques containing each colorant in stabilized resin were measured and used as a standard to compare the shade shift and discolorization of the colorant in the unstabilized resin. The results are reported below in Table 2.

**TABLE 2**

| Dye | λ max (nm) (Stabilized Resin) | Δ E |
|---|---|---|
| Dye D (6-methoxy) | 518 | 16.9 |
| Dye E (4-methyl) | 508 | 9.7 |
| Dye F (unsubstituted) | 500 | 12.7 |

Unexpectedly, the polymeric colorant of the present invention, "E" in the example above, exhibit the greatest stability in the presence of high residual acid levels. The result could not be predicted based upon the properties of the prior art dyes in the same resin system.

**Example 3**

The pH stability of the colorants of the present invention has been confirmed in tests incorporating the colorants in a printing ink which is in turn applied to an acidic printing paper.

Two polymeric colorants were prepared, one containing an unsubstituted benzothiazole radical and the other containing a 4-methyl substituted benzothiazole radical, and designated colorants G and H respectively. The structures are provided below.

Colorant G:

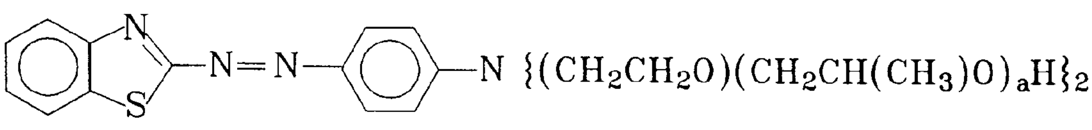

2a = 13

Colorant H:

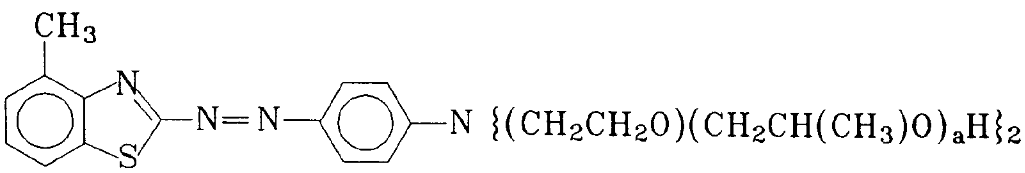

2a = 13

The colorants were incorporated into ink formulations having the following compositions. Identical shades were provided by adjusting the relative pigment and colorant concentrations.

**TABLE 3**

| Ink G | | Ink H | |
|---|---|---|---|
| Compositions | Wt.% | Compositions | Wt.% |
| Colorant | 4.0 | Colorant | 2.5 |
| Toluene | 13.0 | Toluene | 12.0 |
| Solution Resinate | 62.0 | Solution Resinate | 61.5 |
| Lithol Rubine Base | 17.0 | Lithol Rubine Base | 24.0 |
| Barium Lithol Base | 4.0 | Barium Lithol Base | 0.0 |

The pigment bases of lithol rubine and barium lithol are high viscosity dispersions of the pigment in toluene and varnish. The ink formulations were adjusted slightly by varying the relative concentration of toluene and solution resinate to provide identical viscosity of 12.5 seconds (Number 2 Shell Cup).

Drawdown exemplars of the above described inks were prepared on a K-Proofer gravure test press using a test pattern plate having variable ink density print bars ranging from 100% to 5% tone. Prints were made on 60# Bowater coated stock, an acidic paper. Immediately after printing, but waiting sufficient time for solvent evaporation to occur, such that the images are not tacky to the touch, the color space coordinates were measured for each of the prints using an X-Rite Spectrodensitometer Model 938. The test images were then placed in a 140° F oven for 48 hours. When removed from the oven, the color space coordinates were re-measured on the test images for variation. Table 4 summarizes the results with respect to these measurements.

TABLE 4

| Formulations | Before Heat Treatment | After Heat Treatment | ΔE |
|---|---|---|---|
| Ink G | L* = 45.53 | L* = 44.25 | 5.93 |
| | a* = 64.89 | a* = 61.71 | |
| | b* = 4.23 | b* = -0.61 | |
| Ink H | L* = 46.80 | L* = 46.30 | 0.92 |
| | a* = 64.77 | a* = 65.33 | |
| | b* = 5.38 | b* = 5.90 | |

There are, of course, many alternate embodiments and modifications which are intended to be included within the scope of the following claims.

## Claims

**1.** A colorant comprising a compound of the formula:

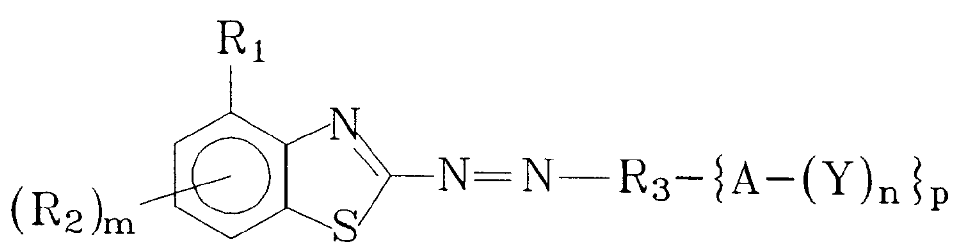

where $R_1$ is $C_1$-$C_4$ alkyl, Cl or Br; $R_2$ is at each occurrence independently selected from $C_1$-$C_4$ alkyl, $-OR_4$, $-CO_2R_4$, Cl, Br, $CF_3$, $-NO_2$ or $-SO_3^-M^+$ where $R_4$ is $C_1$-$C_8$ alkyl or phenyl, M is a counter ion selected from alkali and alkaline earth metals, ammonium, and amine derived cations; and where m is 0, 1, 2 or 3; $R_3$ is a phenyl or naphthyl radical which may be substituted up to four groups independently selected from $C_1$-$C_4$ alkyl, $-OR_4$, $-CO_2R_4$, Cl, Br, $CF_3$, $-SO_2N(R_4)_2$, $-SO_2NHR_4$, $NHR_4$, $-N(R_4)_2$, and $-SO_3^-M^+$ where $R_4$ and M are identified above;

A is a linking group selected from N and O; Y is a poly(oxyalkylene) substituent having from 4 to 250 $C_2$-$C_4$ alkylene oxide residues; where n is 1 when A is O, and 2 when A is N; and p is 1 or 2.

**2)** A colorant as claimed in Claim 1 wherein $R_1$ is methyl or ethyl.

**3)** A colorant as claimed in either of Claims 1 and 2 wherein group A is oxygen and Y comprises from 8 to 80 of said $C_2$-$C_4$ alkylene oxide residues.

**4)** A colorant as claimed in either of Claims 1 and 2 wherein group A is nitrogen and Y comprises from 4 to 40 of said $C_2$-$C_4$ alkylene oxide residues.

**5)** A colorant as claimed in any one of Claims 1 to 4 wherein m is 0 or 1.

**6)** A colorant as claimed in any one of Claims 1 to 5 wherein p is 1.

**7)** A colorant as claimed in either of Claims 1 and 2 comprising a compound of the formula:

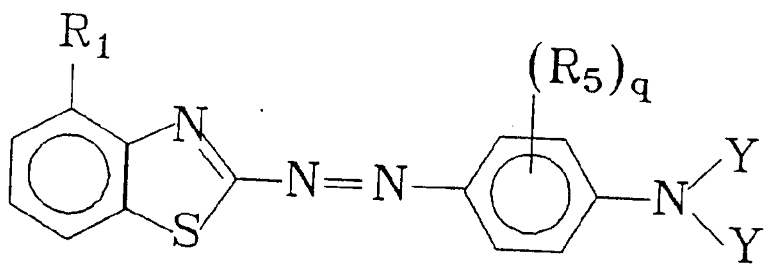

where $R_1$ is methyl or ethyl and $R_5$ is independently selected at each occurrence from $C_1$-$C_4$ alkyl, $-OR_4$, $-CO_2R_4$, Cl, Br, $CF_3$; q is 0, 1, or 2; and Y is a poly(oxyalkylene) substituent having from 4 to 250 $C_2$-$C_4$ alkylene oxide residues.

**8)** A colorant as claimed in Claim 7 wherein Y comprises from 4 to 40 of said $C_2$-$C_4$ alkylene oxide residues.

**9)** A colorant as claimed in either of Claims 7 and 8 wherein q is 0 or 1, preferably wherein q is 0.

**10)** A colorant as claimed in any one of Claims 7 to 9 wherein group $R_5$ is $C_1$-$C_4$ alkyl.

**11)** A colorant as claimed in any one of Claims 1 to 10 wherein said alkylene oxide groups are ethylene oxide and/or propylene oxide.

**12)** A composition comprising a thermoplastic resin and a colorant as claimed in any one of Claims 1 to 11 incorporated in said resin in a concentration of from 0.0001 to 5 wt% based on the weight of said composition, whereby said colorant is distributed throughout a mass of said resin.

**13)** A composition as claimed in Claim 12 wherein said thermoplastic resin is selected from the group consisting of polyolefin, polyvinyl chloride, polyvinylidene chloride, cellulosic, acrylic, styrene-acrylonitrile, polystyrene, polycarbonate, acrylonitrile-butadiene-styrene, polyamide and polyester resins.

**14)** A composition as claimed in either of Claims 12 and 13 wherein said resin is a thermoplastic polyolefin resin.

**15)** A composition as claimed in any one of Claims 12 and 14 wherein said polyolefin resin is selected from the group consisting of polyethylene resin, polypropylene resin, polybutylene resin, random and block copolymers and terpolymers of ethylene, propylene and butylene.

**16)** A composition as claimed in any one of Claims 12 to 15 wherein said colorant is present in an amount of from 0.0001 to 3 wt% based on the weight of said composition.

European Patent Office

# EUROPEAN SEARCH REPORT

Application Number
EP 93 31 0436

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 978 362 (E.W.KLUGER ET AL.) * table 2, entries 1-11, 17-22, 24; table 3, entry 5 * * column 2, line 66 - column 3, line 13; claims * | 1,2,4-16 | C09B69/00 C08K5/46 C08K5/00 C09D11/02 C08G65/28 |
| X | EP-A-0 247 782 (MILLIKEN RESEARCH CORP.) * Table 3, examples 24,25,29,31 * * claims * | 1,2, 4-13,16 | |
| X | US-A-5 043 013 (E.W.KLUGER ET AL.) * example 20, table V, entries 5, 7; example 21, table VI, entry 4 * * claim 2 * | 1,2,4-11 | |
| X | EP-A-0 437 105 (MILLIKEN RESEARCH CORP.) * page 71, table 11, entry 2 * * examples 10,11 * | 1,4-6, 11-16 | |

TECHNICAL FIELDS SEARCHED (Int.Cl.5)

C09B
C08K
C09D

The present search report has been drawn up for all claims

| Place of search | Date of completion of the search | Examiner |
|---|---|---|
| THE HAGUE | 25 March 1994 | Ginoux, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)